(19) Europäisches Patentamt
European Patent Office
Office européen des brevets

(11) Veröffentlichungsnummer: **0 424 639 A1**

(12) **EUROPÄISCHE PATENTANMELDUNG**

(21) Anmeldenummer: **90116611.6**

(22) Anmeldetag: **30.08.90**

(51) Int. Cl.5: **C08G 69/28**, C08G 69/32, C08G 69/42

(30) Priorität: **25.10.89 DE 3935467**

(43) Veröffentlichungstag der Anmeldung:
**02.05.91 Patentblatt 91/18**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Bartmann, Martin, Dr.**
**Elper Weg 64**
**W-4350 Recklinghausen(DE)**
Erfinder: **Finke, Jürgen, Dr.**
**Münsterlandstrasse 22**
**W-4370 Marl(DE)**

(54) **Verfahren zur Herstellung eines thermoplastisch verarbeitbaren, aromatischen Polyamids.**

(57)
2.1 Es sollen aromatische Polyamide mit einer verbesserten Stabilität gegen Thermooxidation und Hydrolyse zur Verfügung gestellt werden.
2.2 Dies wurde dadurch erreicht, daß die verwendete Dicarbonsäure im Überschuß eingesetzt wird.
2.3 Mit Hilfe des erfindungsgemäßen Verfahren gelingt es, gegen Thermooxidation stabile aromatische Polyamide zu erhalten.

EP 0 424 639 A1

Xerox Copy Centre

# VERFAHREN ZUR HERSTELLUNG EINES THERMOPLASTISCH VERARBEITBAREN AROMATISCHEN POLYAMIDS

Gegenstand der Erfindung ist ein Verfahren zur Herstellung eines thermoplastisch verarbeitbaren, aromatischen Polyamids durch Polykondensieren nachstehender Ausgangsmonomeren:

A. HOOC - Ar - COOH

B. $H_2N$ - Ar' - $NH_2$

hierbei bedeutet

Ar: 1.3- oder 1.4-Phenylen; 1.4-, 1.5-, 2.6- oder 2.7-Naphthylen,

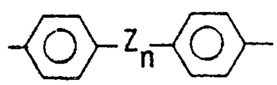

oder

Ar':

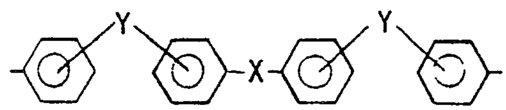 ;

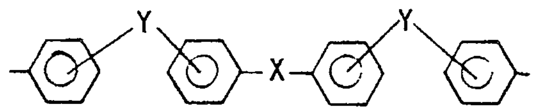 ;

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

n: 0; 1;

in der Schmelze in Gegenwart eines Katalysators bei Temperaturen im Bereich von 200 bis 400 °C.

Die Herstellung solcher Polyamide ist grundsätzlich bekannt (DE-OS 36 09 011). Die Schmelzviskosität dieser aromatischen Polyamide ist allerdings hoch. Daher sind bei ihrer Herstellung und Verarbeitung sehr hohe Temperaturen erforderlich - im allgemeinen min destens 350 °C. Bei diesen Temperaturen wird häuf ig eine Schädigung des Produkts beobachtet, erkennbar an Verfärbungen oder einer Verschlechterung der mechanischen Eigenschaften.

Ein anderer Nachteil der so hergestellten Polyamide ist ihre Empfindlichkeit gegenüber hydrolytischem Abbau, hervorgerufen durch eine hohe Wasseraufnahme. Um dies zu verhindern, sind bei der Verarbeitung zusätzliche Maßnahmen - wie z. B. Trocknung - erforderlich.

Aufgabe der Erfindung war es, Formmassen auf Basis aromatischer Polyamide zur Verfügung zu stellen, die die geschilderten Nachteile der Produkte des Standes der Technik nicht aufweisen.

Diese Aufgabe wurde dadurch gelöst, daß die Komponente A. im Molverhältnis zur Komponente B. im Überschuß verwendet wird.

Vorzugsweise liegt das Molverhältnis Komponente A. : Komponente B. im Bereich von 1,1 bis 1,01 : 1,0 und insbesondere bei 1,08 bis 1,02 : 1,0.

Als aromatische Dicarbonsäuren (Komponente A.) kommen Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon in Frage.

Bevorzugt als Komponente A. wird Isophthalsäure allein oder ein Gemisch von Isophthalsäure mit einer der weiteren oben genannten Säuren eingesetzt. Im letzteren Fall werden bis zu 45 Mol-% Isophthalsäure ersetzt.

Als aromatische Diamine (Komponente B.) kommen z. B. 4.4'-Bis(4-aminophenoxy)diphenylsulfon, 4.4'-Bis(3-aminophenoxy)diphenylsulfon, 4.4'-Bis(4-aminophenoxy)benzophenon, 4.4'-Bis(3-aminophenoxy)-benzophenon, 4.4'-Bis(p-aminophenylmercapto)benzophenon, 4.4'-Bis(p-aminophenylmercapto)-diphenylsulfon oder Gemische davon in Frage.

Bevorzugt wird 4.4'-Bis(4-aminophenoxi)diphenylsulfon verwendet.

Die Glastemperatur ($T_g$) der erfindungsgemäßen Polyamide liegt im Bereich von 190 bis 270 °C, die Viskositätszahlen (J-Werte) bei etwa 30 bis 100 $cm^3/g$; bevorzugt bei 60 bis 80 $cm^3/g$.

Die Herstellung der aromatischen Polyamide ist grundsätzlich bekannt. Sie wird u. a. in DE-OS 36 09 011 beschrieben.

Die Polykondensation erfolgt in Gegenwart von Katalysatoren. Hierfür kommen Phosphor enthaltende Verbindungen wie Triphenylphosphit oder Säuren der allgemeinen Formel $H_3PO_m$ mit m = 2 bis 4 in Frage. Mit diesen Stoffen im Gemisch können auch Zinn(II)-Verbindungen, wie z. B. Zinn(II)-Salze organischer Carbonsäuren, eingesetzt werden.

Es ist auch bekannt, zusätzlich Cokatalysatoren, wie z. B. Dialkylaminopyridine zu verwenden.

Die Katalysatoren werden in Mengen von 0,05 bis 4 Mol,-%, vorzugsweise 0,1 bis 2 Mol.-% - bezogen auf die Summe der Komponenten A. und B. - verwendet.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu Formmassen verarbeitet werden.

Die Formassen können zusätzlich noch Füllstoffe, wie Talkum, oder Verstärkungsmittel, wie Glas-, ARAMID$^R$- oder Kohlefasern, sowie ande re übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Nach dem erfindungsgemäßen Verfahren hergestellte aromatische Polyamide weisen eine unerwartet hohe Temperaturstabilität auf. Eine Verarbeitung der Produkte kann noch bei Temperaturen > 340 °C erfolgen, ohne daß eine Abnahme des Molekulargewichtes oder eine Braunfärbung eintritt. Ferner zeigen erfindungsgemäß erhaltene Formmassen eine hervorragende Stabilität gegenüber Thermooxidation, so daß sie noch bei deutlich höheren Temperaturen als entsprechende Massen des Standes der Technik eingesetzt werden können. Zu diesen Eigenschaften hinzuzurechnen ist eine gute Wärmestandfestigkeit, d. h. Formmassen, welche die erfindungsgemäßen aromatischen Polyamide zur Basis haben, können über lange Zeiträume hohen Temperaturen ausgesetzt werden, ohne das ein deutlicher Verlust bei den mechanischen Eigenschaften auftritt. Ferner weisen sie eine unerwartet hohe Hydrolysebeständigkeit auf.

Die in der Beschreibung und in den Beispielen genannten Parameter wurden mit Hilfe nachstehender Verfahren bestimmt.

Der Glaspunkt ($T_g$) wurde unter Verwendung eines DSC bei einer Aufheizrate von 10 °C/min. bestimmt.

Die Viskositätszahlen (J) wurden an 0,5 % 96 Gew.-%igen Lösungen der Polyamide in einem Phenol/o-Dichlorbenzol-Gemisch (1 : 1 Gewichtsteile) bei 25 °C nach DIN 53 728 bestimmt.

Die Wärmealterung der Prüfkörper wurde bei 250 °C in einem Umluftofen mit 10 % Frischluftzufuhr durchgeführt.

Mit Buchstaben gekennzeichnete Beispiele sind nicht erfindungsgemäß.-

## Beispiele

### Beispiel 1:

21,62 g (0,05 Mol) 4,4'-Bis(4-aminophenoxy)diphenylsulfon und 8,64 g (0,052 Mol) Isophthalsäure wurden mit 155 mg (0,0005 Mol) Triphenylphosphit und 61,1 mg (0,005 Mol) 4-Dimethylaminopyridin in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 10 Minuten bei 300 °C wurde die Reaktion abgebrochen.

Die Viskositätszahl (J) betrug 24 $cm^3/g$. Eine Festphasennachkondensation bei 250 °C und 0,5 mbar lieferte nach 24 h ein Polyamid mit J = 68 $cm^3/g$.

Beispiele 2 - 6 und Beispiele A und B

Die Beispiele 2 - 6 sowie Beispiele A und B wurden analog Beispiel 1 polykondensiert, jedoch wurden der Dicarbonsäureüberschuß und die Katalysatorzusammensetzung gemäß folgender Tabelle variiert:

Wärmealterung

Die in den Beispielen 1 bis 6 sowie A und B hergestellten Polyamide wurden bei 310 °C und einem Druck von 100 bar zu Platten von 1 mm Dicke verpreßt und in einem Umluftofen 2 Stunden lang gealtert. Die in den Beispielen A und B hergestellten Polyamide waren dunkelbraun verfärbt, während die nach den Beispielen 1 bis 6 hergestellten Polyamide praktisch keine Verfärbung aufwiesen.

Tabelle

| Beispiel | BAPS[1] | IPS[2] | Katalysator | | Cokatalysator | | J | | J[7] | |
|---|---|---|---|---|---|---|---|---|---|---|
| | [Mol] | [Mol] | | [Mol.-%] | | [Mol.-%] | [$cm^3/g$] | Farbe | [$cm^3/g$] | Farbe nach Alterung |
| 1 | 0,05 | 0,052 | $P(OPh)_3$ 3) | 1.0 | DMAP[4] | 1.0 | 24 | hellgelb | 68 | gelb |
| 2 | 0,05 | 0,054 | $H_3PO_2$ | 0.5 | DMAP | 0.5 | 21 | hellgelb | 66 | hellgelb |
| 3 | 0,05 | 0,053 | $H_3PO_3$ | 1.5 | DMAP | 1.5 | 29 | hellgelb | 65 | beige |
| 4 | 0,05 | 0,051 | $H_3PO_4$ | 0.4 | - | - | 18 | hellgelb | 71 | hellgelb |
| | | | SnOx 5) | 0.4 | | | | | | |
| 5 | 0,05 | 0,0535 | $P(OPh)_3$ | 1.6 | - | - | 27 | hellgelb | 64 | hellgelb |
| | | | $Sn(oct)_2$ 6) | 1.6 | | | | | | |
| 6 | 0,05 | 0,0525 | $P(oPh)_3$ | 0.5 | DMAP | 0.5 | 22 | hellgelb | 65 | gelb |
| A | 0,05 | 0,05 | $P(OPh)_3$ | 0.5 | DMAP | 0.5 | 21 | hellgelb | 73 | braun |
| B | 0,052 | 0,05 | $P(OPh)_3$ | 0.5 | DMAP | 0.5 | 23 | hellgelb | 63 | dunkelbraun |

1) 4,4′-Bis(4-aminophenoxy)diphenylsulfon
2) Isophlthalsäure
3) Triphenylphosphit
4) 4-Dimethylaminopyridin
5) Zinn(II)oxalat
6) Zinn(II)octoanat
7) gemessen nach Festphasennachkondensation

## Ansprüche

1. Verfahren zur Herstellung eines thermoplastisch verarbeitbaren, aromatischen Polyamids durch Polykondensieren nachstehender Ausgangsmonomeren:

A. HOOC - Ar - COOH

B. $H_2N$ - Ar' - $NH_2$

hierbei bedeutet

Ar: 1.3-oder 1.4-Phenylen; 1.4-, 1.5-, 2.6- oder 2.7-Naphthylen,

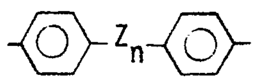

oder

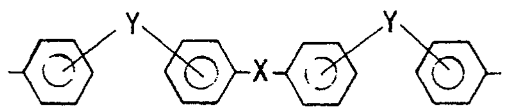

;

Ar' :

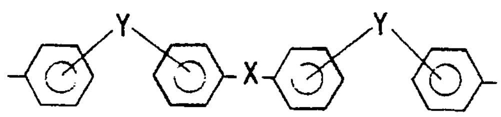

;

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

n: 0; 1;

in der Schmelze in Gegenwart eines Katalysators bei Temperaturen im Bereich von 200 bis 400 °C,

dadurch gekennzeichnet,

daß die Komponente A. im Molverhältnis zur Komponente B. im Überschuß verwendet wird.

2. Verfahren nach Anspruch 1,

dadurch gekennzeichnet,

daß das Molverhältnis Komponente A. : Komponente B. im Bereich von 1,1 bis 1,01 : 1,0 liegt.

3. Verfahren nach Anspruch 1,

dadurch gekennzeichnet,

daß das Molverhältnis Komponente A. : Komponente B. im Bereich von 1,08 bis 1,02 : 1,0 liegt.

4. Formmassen auf der Basis der thermoplastisch verarbeitbaren, aromatischen Polyamide, hergestellt nach den Ansprüchen 1 bis 3.

Europäisches Patentamt

# EUROPÄISCHER RECHERCHENBERICHT

Nummer der Anmeldung

**EP 90 11 6611**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 237 722 (HULS AKTIENGESELLSCHAFT)<br>* Ansprüche 1-8 * & DE-OS 3609011 (Kat.D)<br>- - - - - | 1-4 | C 08 G 69/28<br>C 08 G 69/32<br>C 08 G 69/42 |
| | | | **RECHERCHIERTE SACHGEBIETE (Int. Cl.5)** |
| | | | C 08 G |

Der vorliegende Recherchenbericht wurde für alle Patentansprüche erstellt

| Recherchenort | Abschlußdatum der Recherche | Prüfer |
|---|---|---|
| Den Haag | 16 Januar 91 | GLANDDIER A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument